(19) Europäisches Patentamt
European Patent Office
Office européen des brevets

(11) **EP 4 363 808 B1**

(12) **EUROPEAN PATENT SPECIFICATION**

(45) Date of publication and mention of the grant of the patent:
**29.07.2026  Bulletin 2026/31**

(21) Application number: **22741895.1**

(22) Date of filing: **15.06.2022**

(51) International Patent Classification (IPC):
**G01F 1/84** (2006.01)    **G01N 9/00** (2006.01)
**G01N 11/16** (2006.01)

(52) Cooperative Patent Classification (CPC):
**G01F 1/8431; G01F 1/8436; G01N 9/002;
G01N 11/16;** G01N 2009/006

(86) International application number:
**PCT/US2022/033530**

(87) International publication number:
**WO 2023/278145 (05.01.2023 Gazette 2023/01)**

(54) **CORIOLIS FLOW METER FOR A NON-IDEAL FLUID AND ASSOCIATED METHODS**

CORIOLIS-DURCHFLUSSMESSGERÄT FÜR EIN NICHT-IDEALES FLUID UND ZUGEHÖRIGE VERFAHREN

DÉBITMÈTRE DU TYPE CORIOLIS POUR UN FLUIDE NON IDÉAL ET PROCÉDÉS ASSOCIÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2021   US 202163215714 P**

(43) Date of publication of application:
**08.05.2024   Bulletin 2024/19**

(73) Proprietor: **Micro Motion, Inc.
Boulder, CO 80301 (US)**

(72) Inventors:
  • **PATTEN, Andrew Timothy**
    Gunnison, Colorado 81230 (US)
  • **BUTTLER, Marc Allan**
    Erie, Colorado 80516 (US)
  • **HAYS, Paul J.**
    Lafayette, Colorado 80026 (US)

(74) Representative: **Ellis, Christopher Paul
    Ollila Law Limited
    Edwards Centre
    The Horsefair
    Hinckley LE10 0AN (GB)**

(56) References cited:
WO-A1-2021/086401    US-A1- 2011 264 385
US-A1- 2017 103 634    US-B1- 6 412 355

• ABBACI A ET AL: "A Thermodynamic Equation of State For the Critical Region of Ethylene", INTERNATIONAL JOURNAL OF THERMOPHYSICS, SPRINGER US, NEW YORK, vol. 25, no. 3, 1 May 2004 (2004-05-01), pages 739 - 752, XP036280571, ISSN: 0195-928X, [retrieved on 20040501], DOI: 10.1023/B:IJOT.0000034235.06616.97

• HEMP J ET AL: "Theory of errors in Coriolis flowmeter readings due to compressibility of the fluid being metered", FLOW MEASUREMENT AND INSTRUMENTATION, BUTTERWORTH-HEINEMANN, OXFORD, GB, vol. 17, no. 6, 1 December 2006 (2006-12-01), pages 359 - 369, XP024961020, ISSN: 0955-5986, [retrieved on 20061201], DOI: 10.1016/J.FLOWMEASINST.2006.07.006

EP 4 363 808 B1

**Description**

FIELD OF THE INVENTION

The present invention relates to flowmeter devices and methods, and more particularly, to flowmeter devices and methods for measuring ethylene, carbon dioxide, ethane, and other fluids and fluid mixtures that are otherwise challenging to measure by conventional means.

BACKGROUND

Vibrating conduit sensors, such as Coriolis mass flowmeters and vibrating densitometers, typically operate by detecting motion of a vibrating conduit that contains a flowing material. Properties associated with the material in the conduit, such as mass flow, density, and the like, can be determined by processing measurement signals received from motion transducers associated with the conduit. The vibration modes of the vibrating material-filled system generally are affected by the combined mass, stiffness, and damping characteristics of the containing conduit and the material contained therein.

A typical Coriolis mass flowmeter includes one or more conduits (also called flow tubes) that are connected inline in a pipeline or other transport system and convey material, e.g., fluids, slurries, emulsions, and the like, in the system. Each conduit may be viewed as having a set of natural vibration modes, including for example, simple bending, torsional, radial, and coupled modes. In a typical Coriolis mass flow measurement application, a conduit is excited in one or more vibration modes as a material flows through the conduit, and motion of the conduit is measured at points spaced along the conduit. Excitation is typically provided by a driver, e.g., an electromechanical device, such as a voice coil-type actuator, that perturbs the conduit in a periodic fashion. Mass flow rate may be determined by measuring time delay or phase differences between motions at the transducer locations. Two or more such transducers (or pickoff sensors) are typically employed in order to measure a vibrational response of the flow conduits, and are typically located at positions upstream and downstream of the driver. Instrumentation receives signals from the pickoff sensors and processes the signals in order to derive a mass flow rate measurement.

Flowmeters may be used to perform mass flow rate measurements for a wide variety of fluid flows. One area in which Coriolis flowmeters can potentially be used is with processes that comprise Ethylene.

Ethylene is the most common feed-stock for many plastics manufacturing processes. When transferring ethylene from one location to another (from a producer to a user, for instance) it is often pumped at high pressure in its critical phase condition. Critical phase ethylene has a much higher density than gaseous ethylene, so its pumping costs are relatively low (a good analogy is high voltage power transmission). Mass flow measurement is the preferred unit when measuring ethylene.

Unfortunately, critical phase ethylene exhibits properties that make accurate measurements difficult, as it does not behave as an ideal gas. In particular, its density and velocity-of-sound (VoS) properties exhibit large changes for relatively small changes in temperature and/or pressure. This makes flow measurement very difficult for all technologies, including Coriolis-based meters.

Critical phase ethylene is often transferred at pressures of 50 bar or higher. Usually, temperature is approximately ambient, 20°C or so, but temperature can vary depending on the ground conditions since the pipelines are often underground. In the critical range, density changes dramatically with pressure and/or temperature changes. For instance, a 1 psi change in pressure causes a 2 kg/m3 density change. This compares to an ideal gas where the density changes less than 0.1 kg/m3 for the same change in pressure.

In addition to changes in density, the magnitude of VoS changes are also sensitive to pressure changes. A 1 psi pressure change causes a 5 m/s VoS change, whereas an ideal gas does not change VoS at all when the pressure changes. This may present an issue for a Coriolis mass flowmeter. In an example flowmeter, a 1 psi ethylene pressure change can cause a 5 m/s VoS change, which in turn causes a 0.03% change in measurement. This means that for a normal pipeline pressure variation of 100 psi, the example flowmeter will exhibit an error of 3%, which is unacceptable. Our specification is 0.35% and typical measurement requirement is better than 0.5%. It will thus be clear that if ethylene is operated in the critical phase region, large flowrate errors may be encountered.

Document US 6 412 355 B1 describes a flowmeter for ethylene fluid at a pressure above critical phase pressure, that includes measurement of a temperature, a density, a velocity of sound, and calcluation of a mass flow rate error, and a corrected mass flow rate. WO 2021/086401 describes a system including a flowmeter and a densitometer for a fluid in a supercritical state.

A Coriolis flowmeter and method for operating the Coriolis flowmeter is provided, wherein a density measurement provides a velocity of sound correction. This results in a more accurate flow measurement over a wide range of ethylene operating conditions.

SUMMARY OF THE INVENTION

The invention is defined by the method for operating a flowmeter of independent claim 1 and by a meter electronics for a flowmeter of independent claim 8. The dependent claims are directed to advantageous embodiments.

ASPECTS OF THE INVENTION

Preferably, the fluid comprises a non-ideal fluid.
Preferably, the fluid consists of ethylene.
Preferably, the fluid comprises ethylene.
Preferably, the fluid consists of ethane.
Preferably, the fluid comprises ethane.
Preferably, the fluid consists of carbon dioxide.
Preferably, the fluid comprises carbon dioxide.
Preferably, the fluid comprises one of freon, sulfur hexafluoride, and uranium hexafluoride.
Preferably, the flowmeter comprises a Coriolis mass flowmeter.
Preferably, the flowmeter calculates the temperature of the fluid.
Preferably, the flowmeter calculates the density of the fluid.
Preferably, calculating the VoS of the fluid comprises using the temperature and the density.
Preferably, calculating the VoS of the fluid comprises cross-referencing and interpolating the temperature and the density using a VoS table.
Preferably, the VoS table comprises extrapolated VoS values.
Preferably, calculating mass flow rate error is calculated as:

$$mass\ flow\ rate\ error = m_e = C\left(\frac{2\pi f d}{2a}\right)^2 \%$$

Wherein:

$C$ = meter constant (e.g., $\frac{1.}{2.}$ );

$f$ = meter operating frequency, hz;
$d$ = meter tube diameter, meters;
$a$ = acoustic velocity (a. k. a. , VoS) of the fluid ,m/s.

Preferably, the corrected mass flow rate is calculated using the mass flow.
Preferably, the corrected mass flow rate is calculated as:

$$Corrected\ mass\ flow = \frac{mass\ flow\ measured}{1+\frac{m_e}{100}}.$$

BRIEF DESCRIPTION OF THE DRAWINGS

FIG. 1 shows a flowmeter comprising a sensor assembly and meter electronics;
FIG. 2 shows a block diagram of the meter electronics according to an embodiment;
FIG. 3 is a graph illustrating ethylene VoS versus pressure;
FIG. 4 is a graph illustrating ethylene VoS versus density;
FIG. 5A is a table indicating ethylene VoS based on density and temperature;
FIG. 5B is a table indicating ethylene VoS based on density and temperature, having some values therein extrapolated;
FIG. 6 is a flow chart illustrating a method of mass flow correction;
FIG. 7 is a table indicating ethane VoS based on density and temperature; and
FIG. 8 is a table indicating carbon dioxide VoS based on density and temperature.

DETAILED DESCRIPTION

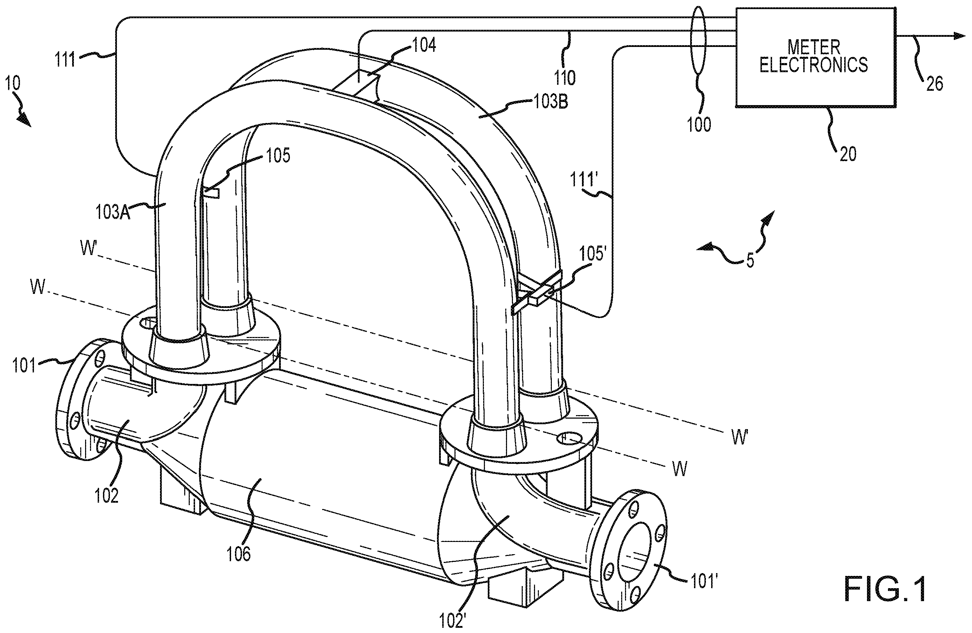

**FIGS. 1-8** and the following description depict specific examples to teach those skilled in the art how to make and use the best mode of the invention. For the purpose of teaching inventive principles, some conventional aspects have been simplified or omitted. Those skilled in the art will appreciate variations from these examples that fall within the scope of the invention. Those skilled in the art will appreciate that the features described below can be combined in various ways to form multiple variations of the invention as defined in the appended claims.

**FIG.** 1 shows a flowmeter 5 according to an embodiment. The flowmeter 5 comprises a sensor assembly 10 and meter electronics 20. The meter electronics 20 is connected to the sensor assembly 10 via leads 100 and is configured to provide measurements of one or more of a density, mass flow rate, volume flow rate, totalized mass flow, temperature, or other measurements or information over a communication path 26. The flowmeter 5 can comprise a Coriolis mass flowmeter or other vibratory flowmeter. It should be apparent to those skilled in the art that the flowmeter 5 can comprise any manner of flowmeter 5, regardless of the number of drivers, pick-off sensors, flow conduits, or the operating mode of vibration.

The sensor assembly 10 includes a pair of flanges 101 and 101', manifolds 102 and 102', a driver 104, pick-off sensors 105 and 105', and flow conduits 103A and 103B. The driver 104 and the pick-off sensors 105 and 105' are connected to the flow conduits 103A and 103B.

The flanges 101 and 101' are affixed to the manifolds 102 and 102'. The manifolds 102 and 102' can be affixed to opposite ends of a spacer 106 in some embodiments. The spacer 106 maintains the spacing between the manifolds 102 and 102'. When the sensor assembly 10 is inserted into a pipeline (not shown) which carries the process fluid being measured, the process fluid enters the sensor assembly 10 through the flange 101, passes through the inlet manifold 102 where the total amount of process fluid is directed to enter the flow conduits 103A and 103B, flows through the flow conduits 103A and 103B and back into the outlet manifold 102', where it exits the sensor assembly 10 through the flange 101'.

The process fluid can comprise a liquid. The process fluid can comprise a gas. The process fluid can comprise a multi-phase fluid, such as a liquid including entrained gases and/or entrained solids, for example without limitation. The flow conduits 103A and 103B are selected and appropriately mounted to the inlet manifold 102 and to the outlet manifold 102' so as to have substantially the same mass distribution, moments of inertia, and elastic moduli about the bending axes W-W and W'-W', respectively. The flow conduits 103A and 103B extend outwardly from the manifolds 102 and 102' in an essentially parallel fashion.

The flow conduits 103A and 103B are driven by the driver 104 in opposite directions about the respective bending axes W and W' and at what is termed the first out of phase bending mode of the flowmeter 5. The driver 104 may comprise one of many well-known arrangements, such as a magnet mounted to the flow conduit 103A and an opposing coil mounted to the flow conduit 103B. An alternating current is passed through the opposing coil to cause both conduits to oscillate. A suitable drive signal is applied by the meter electronics 20 to the driver 104 via lead 110. Other driver devices are contemplated and are within the scope of the description and claims.

The meter electronics 20 receives sensor signals on leads **111** and **111',** respectively. The meter electronics 20 produces a drive signal on lead 110 which causes the driver 104 to oscillate the flow conduits 103A and 103B. Other sensor devices are contemplated and are within the scope of the description and claims.

The meter electronics 20 processes the left and right velocity signals from the pick-off sensors 105 and 105' in order to compute a flow rate, among other things. The communication path 26 provides an input and an output means that allows the meter electronics 20 to interface with an operator or with other electronic systems. The description of FIG. 1 is provided merely as an example of the operation of a flowmeter and is not intended to limit the teaching of the present invention. In embodiments, single tube and multi-tube flowmeters having one or more drivers and pickoffs are contemplated.

The meter electronics 20 in one embodiment is configured to vibrate the flow conduit 103A and 103B. The vibration is performed by the driver 104. The meter electronics 20 further receives resulting vibrational signals from the pickoff sensors 105 and 105'. The vibrational signals comprise a vibrational response of the flow conduits 103A and 103B. The meter electronics 20 processes the vibrational response and determines a response frequency and/or phase difference. The meter electronics 20 processes the vibrational response and determines one or more flow measurements, including a mass flow rate and/or density of the process fluid. Other vibrational response characteristics and/or flow measurements are contemplated and are within the scope of the description and claims.

In one embodiment, the flow conduits 103A and 103B comprise substantially omega-shaped flow conduits, as shown. Alternatively, in other embodiments, the flowmeter can comprise substantially straight flow conduits, U-shaped conduits, delta-shaped conduits, etc. Additional flowmeter shapes and/or configurations can be used and are within the scope of the description and claims.

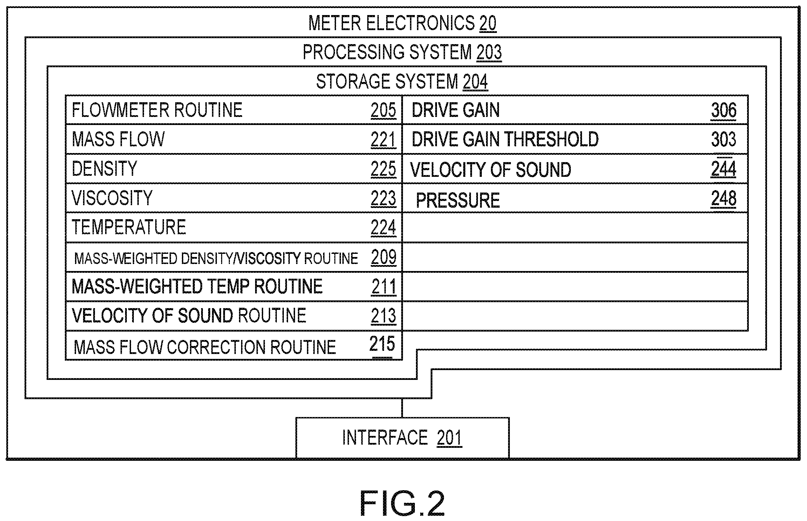

FIG. 2 is a block diagram of the meter electronics 20 of a flowmeter 5 according to an embodiment. In operation, the flowmeter 5 provides various measurement values that may be outputted including one or more of a measured or averaged value of mass flow rate, volume flow rate, individual flow component mass and volume flow rates, and total flow rate, including, for example, both volume and mass flow.

The flowmeter 5 generates a vibrational response. The vibrational response is received and processed by the meter electronics 20 to generate one or more fluid measurement values. The values can be monitored, recorded, saved, totaled, and/or output.

The meter electronics 20 includes an interface 201, a processing system 203 in communication with the interface 201, and a storage system 204 in communication with the processing system 203. Although these components are shown as distinct blocks, it should be understood that the meter electronics 20 can be comprised of various combinations of integrated and/or discrete components.

The interface 201 is configured to communicate with the sensor assembly 10 of the flowmeter 5. The interface 201 may be configured to couple to the leads 100 (see FIG. 1) and exchange signals with the driver 104, pickoff sensors 105 and 105', and temperature sensors (not shown), for example. The interface 201 may be further configured to communicate over the communication path 26, such as to external devices.

The processing system 203 can comprise any manner of processing system. The processing system 203 is configured to retrieve and execute stored routines in order to operate the flowmeter 5. The storage system 204 can store routines including a flowmeter routine 205, a mass-weighted density/viscosity routine 209, a mass-weighted temperature routine 211, a velocity of sound routine 213, and a mass flow correction routine 215. Other measurement/processing routines are contemplated and are within the scope of the description and claims. The storage system 204 can store measurements, received values, working values, and other information. In some embodiments, the storage system stores a mass flow ($\dot{m}$) 221, a density ($\rho$) 225, a viscosity ($\mu$) 223, a temperature (T) 224, a drive gain 306, a drive gain threshold 303, a velocity of sound 244, a pressure 248, and any other variables known in the art.

The flowmeter routine 205 can produce and store fluid quantifications and flow measurements. These values can comprise substantially instantaneous measurement values or can comprise totalized or accumulated values. For example, the flowmeter routine 205 can generate mass flow measurements and store them in the mass flow 221 storage of the storage system 204, for example. The flowmeter routine 205 can generate density 225 measurements and store them in the density 225 storage, for example. The mass flow 221 and density 225 values are determined from the vibrational response, as previously discussed and as known in the art. The mass flow and other measurements can comprise a substantially instantaneous value, can comprise a sample, can comprise an averaged value over a time interval, or can comprise an accumulated value over a time interval. The time interval may be chosen to correspond to a block of time during which certain fluid conditions are detected, for example a liquid-only fluid state, or alternatively, a fluid state including liquids and entrained gas. In addition, other mass flow and related quantifications are contemplated and are within the scope of the description and claims.

As noted above, ethylene is a particularly difficult fluid to measure because density and VoS are subject to large changes based on small differences in operating conditions-especially when operating close to critical pressure and/or temperature. In an embodiment, the mass flow correction routine 215 provides correction means to facilitate accurate flowmeter measurements by using the equation-of-state for ethylene. The temperature and the pressure of the ethylene are required for this embodiment, and methodology disclosed herein provides a flowrate correction.

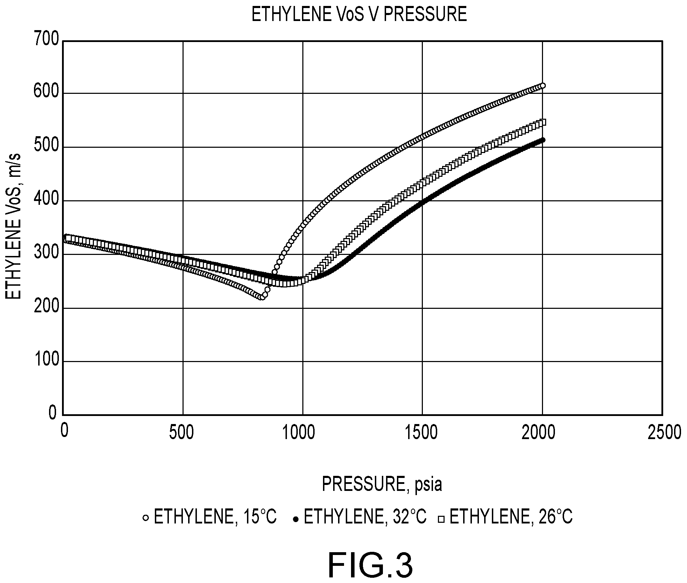

Turning to FIG. 3, it will be clear that the VoS vs. pressure behavior of ethylene is highly non-linear and difficult to characterize.

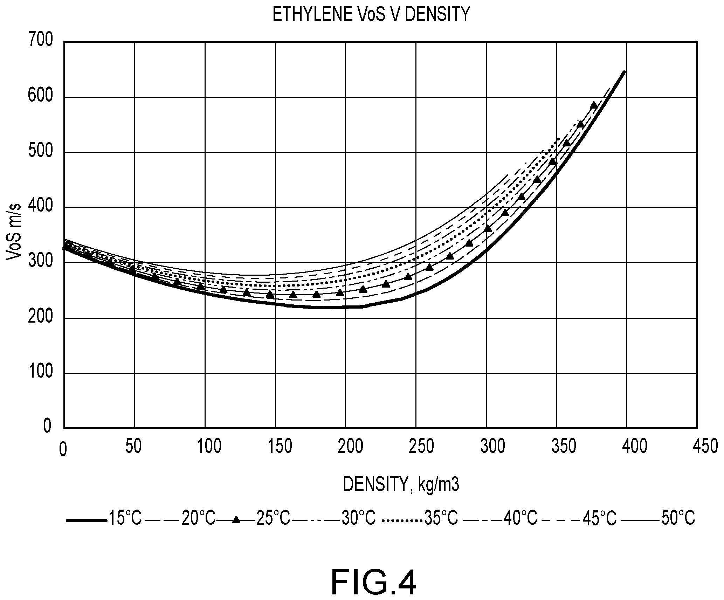

In an embodiment, the relationship between VoS and density at various temperatures is utilized to provide a flowrate correction. Turning to FIG. 4, the relationship between VoS and density at various temperatures is illustrated. It will be evident that this relationship is quite predictable for over 90% of the operating conditions (about 15 to 50°C and about 1 to 150 bar). It will be understood that such relationships may be easily curve fit. Unlike the data shown in FIG.3, there are no significant gradients which makes modelling (or curve fitting) much easier. Additionally, since density and temperature are used as the independent variables, this obviates the need for additional equipment and an external pressure measurement.

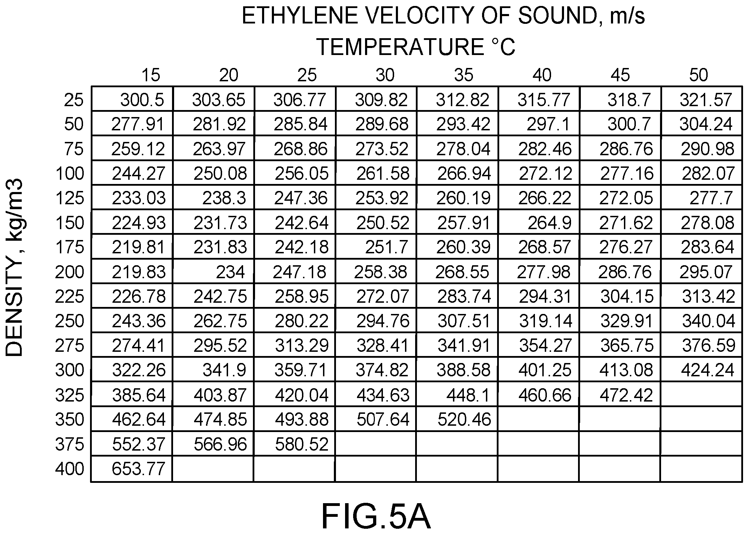

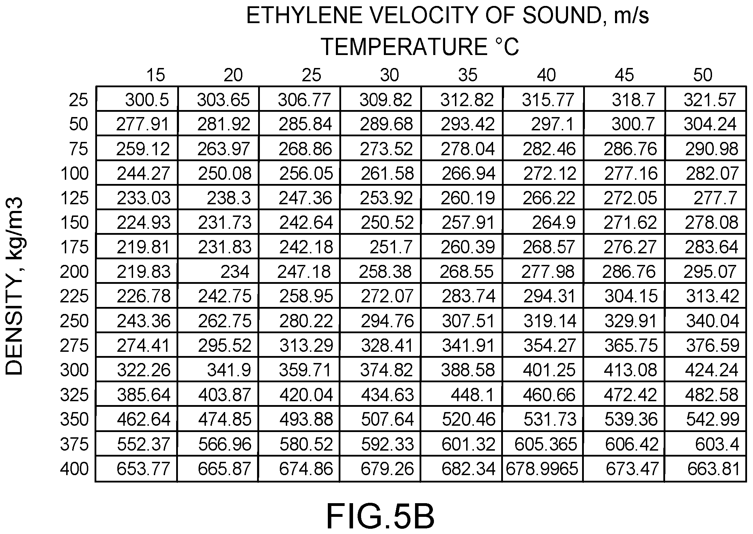

Data was taken from the NIST "Refprop" database for calculating fluid properties. This is illustrated in the table of FIG. 5A. In an embodiment, the table for calculating fluid properties may have extrapolated values therein, as shown by FIG. 5B.

In an embodiment, the correction for mass flow is based on Equations (1) and (2), and is performed by the mass flow correction routine 215 of meter electronics 20.

$$mass\ flow\ error = m_e = C\left(\frac{2\pi f d}{2a}\right)^2 \% \qquad (1)$$

Where:

$C$ = meter constant (e.g., $\frac{1}{2}$);

*f = meter operating frequency, hz;*
*d = meter tube diameter, meters;*
*a = acoustic velocity (a. k. a., VoS) of the fluid, m/s.*

In an embodiment, the mass flow error may then be used to correct a measured mass flow:

$$Corrected\ mass\ flow = \frac{mass\ flow\ measured}{1+\frac{me}{100}} \tag{2}$$

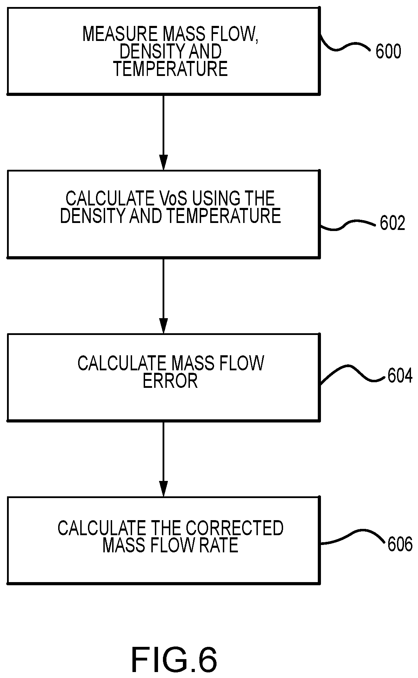

FIG. 6 illustrates a method for correcting mass flow error using a Coriolis mass flowmeter containing ethylene. In step 600, the density of ethylene is measured by the flowmeter. The temperature of the ethylene is also measured. In an embodiment, operating frequency may also be measured.

In step 602, the VoS is calculated using the measured temperature and density. In an embodiment, the VoS is calculated using the table shown in FIG. 5 or a similar table. In an embodiment, the VoS is calculated by interpolation from the table shown in FIG. 5 or from a similar table.

In step 604, the mass flow error is calculated. In an embodiment, the mass flow error is calculated using the VoS. In an embodiment, the mass flow error is calculated using equation (1).

In step 606, the corrected mass flow is calculated. In an embodiment, the corrected mass flow is calculated using equation (2).

Errors stem from both the Coriolis meter's mass flow and density readings due to VoS. Logically, if the density measurement is used to correct the mass flow measurement there must be errors inherent in this correction. However, the behavior of ethylene is such that the error in the density measurement is very small, with the typical density measurement error being $\pm 10$ kg/m3, including VoS errors.

In an illustrative example, provided for understanding, and without limitation, for metering at ethylene's critical point-about 60°F and 750 psia (15°C and 50 bar). The density of ethylene under these conditions is 110 kg/m3. It should be noticed that on the graph of FIG. 4 and in the tables of FIG. 5A and 5B that the VoS changes from 259 to 233 m/s over the density range of 75 to 125 kg/m3 at the temperature of 15°C. As an extreme example, if it is assumed that the density measurement is 50 kg/m3 in error, the resulting VOS calculation error of 26 m/s would result in a mass flow correction error of only 0.5%. A more realistic, albeit still somewhat larger than would be normally expected, density error of 10 kg/m3 would result in an insignificant mass flow correction error, considering the small change in the effect of the VoS error on mass flow that is realized in association with that small of a difference in actual fluid density.

In an illustrative example, provided for understanding, and without limitation, a scenario of metering at conditions where VoS significantly changes is provided. This could happen in a scenario where density is in the range of 350 kg/m3. Here, the VoS effect on the meter is very small, between 0.5% and 0.4%. Again, a 10 kg/m3 density error is insignificant, and the resulting mass flow error is insignificant.

It is thus clear that errors associated with the methods disclosed herein will be small enough for reliable mass flow measurements to be made.

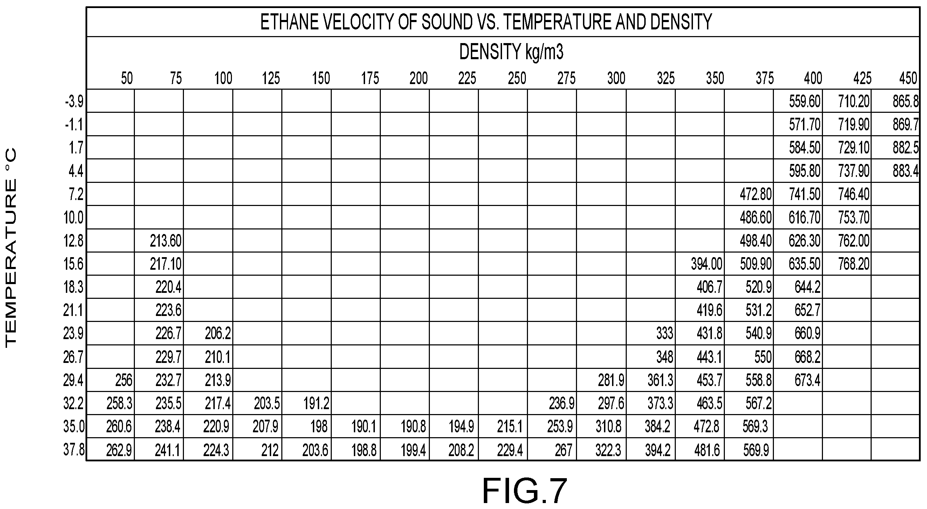

It should be noted that the devices and methods described herein are not limited only to ethylene. Other common critical phase fluids include ethane, carbon dioxide and argon, and the description herein applies, mutatis mutandis, to these fluids as well. For example, **FIG. 7** illustrates the VoS values derived by the meter electronics 20 based upon temperature and density for ethane.

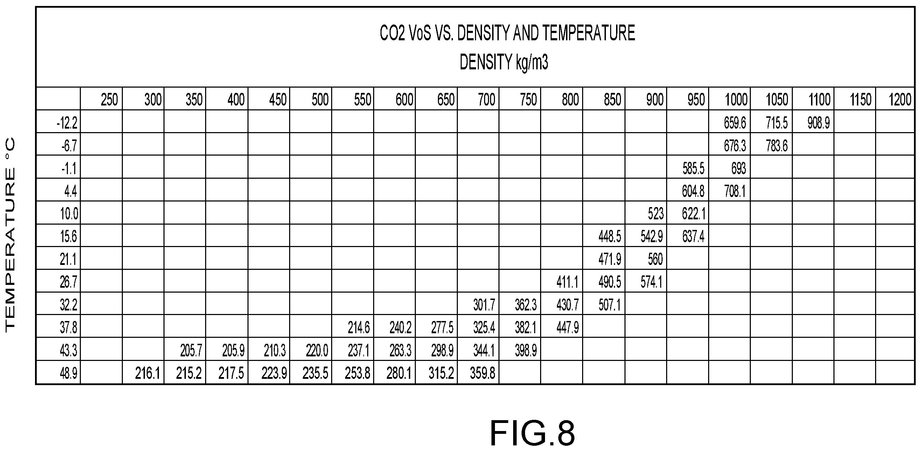

Similarly, **FIG. 8** illustrates the VoS values derived by the meter electronics 20 based upon temperature and density for carbon dioxide ($CO_2$).

The detailed descriptions of the above embodiments are not exhaustive descriptions of all embodiments contemplated by the inventors to be within the scope of the invention as defined in the appended claims.

Indeed, persons skilled in the art will recognize that certain elements of the above-described embodiments may variously be combined or eliminated to create further embodiments, and such further embodiments fall within the scope and teachings of the invention as defined in the appended claims.

It will also be apparent to those of ordinary skill in the art that the above-described embodiments may be combined in whole or in part to create additional embodiments within the scope and teachings of the invention as defined in the appended claims. Accordingly, the scope of the invention should be determined from the following claims.

**Claims**

1. A method for operating a flowmeter comprising:

flowing a critical-phase fluid through the flowmeter;
measuring an uncorrected mass flow rate of the fluid;
measuring a temperature of the fluid;
measuring a density of the fluid;
calculating a velocity of sound (VoS) of the fluid, wherein calculating the VoS of the fluid comprises using the temperature and the density;
calculating a mass flow rate error;
calculating a corrected mass flow rate of the fluid.

2. The method for operating a flowmeter of claim 1, wherein the fluid comprises one of ethylene, ethane, and carbon dioxide.

3. The method for operating a flowmeter of claim 1, wherein the fluid comprises one of freon, sulfur hexafluoride, and uranium hexafluoride.

4. The method for operating a flowmeter of claim 1, wherein calculating the VoS of the fluid comprises cross-referencing and interpolating the temperature and the density using a VoS table.

5. The method for operating a flowmeter of claim 4, wherein the VoS table comprises extrapolated VoS values.

6. The method for operating a flowmeter of claim 1, wherein calculating mass flow rate error is calculated as:

$$mass\ flow\ rate\ error = m_e = C\left(\frac{2\pi f d}{2a}\right)^2 \%$$

Wherein:

$C$ = meter constant (e. g., $\frac{1}{2}$);
$f$ = meter operating frequency, hz;
$d$ = meter tube diameter, meters;
$a$ = acoustic velocity (a. k. a., VoS) of the fluid, m/s.

7. The method for operating a flowmeter of claim 1, wherein the corrected mass flow rate is calculated as:

$$Corrected\ mass\ flow = \frac{mass\ flow\ measured}{1+\frac{m_e}{100}}.$$

8. Meter electronics (20) for a flowmeter (5) configured to receive a critical-phase process fluid, the meter electronics (20) comprising an interface (201) configured to communicate with a flowmeter assembly of the flowmeter (5), and receive a vibrational response, and a processing system (203) coupled to the interface (201) comprising:
a mass flow correction routine (215) configured to:

measure a temperature (224) of the process fluid in the flowmeter (5);
measure a density (225) of the process fluid in the flowmeter (5);
calculate a velocity of sound (VoS) (244) of the process fluid in the flowmeter (5), wherein calculating the VoS of the fluid comprises using the temperature and the density;
calculate a mass flow rate error;
calculate a corrected mass flow rate of the process fluid in the flowmeter (5).

9. The method for operating a flowmeter of claim 8, wherein the fluid comprises one of ethylene, ethane, and carbon dioxide.

10. The method for operating a flowmeter of claim 8, wherein the fluid comprises one of freon, sulfur hexafluoride, and uranium hexafluoride.

11. The meter electronics (20) of claim 8, wherein calculating the VoS of the fluid comprises cross-referencing and interpolating the temperature and the density using a VoS table.

12. The meter electronics (20) of claim 11, wherein the VoS table comprises extrapolated VoS values.

**13.** The meter electronics (20) of claim 8, wherein mass flow rate error is calculated as:

$$mass\ flow\ rate\ error = m_e = C\left(\frac{2\pi f d}{2a}\right)^2\%$$

Wherein:

$C$ = meter constant (e. g. $\frac{1}{2}$);
$f$ = meter operating frequency, hz;
$d$ = meter tube diameter, meters;
$a$ = acoustic velocity (a. k. a., V oS) of the fluid, m/s.

**14.** The meter electronics (20) of claim 8, wherein the corrected mass flow rate is calculated as:

$$Corrected\ mass\ flow = \frac{mass\ flow\ measured}{1+\frac{m_e}{100}}.$$

**Patentansprüche**

**1.** Verfahren zum Betreiben eines Durchflussmessgeräts, Folgendes umfassend:

Führen eines Fluids in kritischer Phase durch das Durchflussmessgerät;
Messen eines nicht korrigierten Massedurchsatzes des Fluids;
Messen einer Temperatur des Fluids;
Messen einer Dichte des Fluids;
Berechnen einer Schallgeschwindigkeit (VoS) des Fluids, wobei das Berechnen der VoS des Fluids das Verwenden der Temperatur und der Dichte umfasst;
Berechnen eines Massedurchsatzfehlers;
Berechnen eines korrigierten Massedurchsatzes des Fluids.

**2.** Verfahren zum Betreiben eines Durchflussmessgeräts nach Anspruch 1, wobei das Fluid eines von Ethylen, Ethan und Kohlenstoffdioxid umfasst.

**3.** Verfahren zum Betreiben eines Durchflussmessgeräts nach Anspruch 1, wobei das Fluid eines von Freon, Schwefelhexafluorid und Uranhexafluorid umfasst.

**4.** Verfahren zum Betreiben eines Durchflussmessgeräts nach Anspruch 1, wobei das Berechnen der VoS des Fluids das Querverweisen und Interpolieren der Temperatur und der Dichte unter Verwendung einer VoS-Tabelle umfasst.

**5.** Verfahren zum Betreiben eines Durchflussmessgeräts nach Anspruch 4, wobei die VoS-Tabelle extrapolierte VoS-Werte umfasst.

**6.** Verfahren zum Betreiben eines Durchflussmessgeräts nach Anspruch 1, wobei das Berechnen des Massedurchsatzfehlers wie folgt berechnet wird:

$$Massedurchsatzfehler = m_e = C\left(\frac{2\pi f d}{2a}\right)^2\%$$

wobei:

$C$ = Messgerätkonstante (z. B. $\frac{1}{2}$);
$f$ = Betriebsfrequenz des Messgeräts, hz;
$d$ = Röhrendurchmesser des Messgeräts, Meter;
$a$ = Schallgeschwindigkeit (auch bekannt als VoS) des Fluids, m/s.

**7.** Verfahren zum Betreiben eines Durchflussmessgeräts nach Anspruch 1, wobei der korrigierte Massedurchsatz wie folgt berechnet wird:

$$korrigierter\ Massestrom\ = \frac{gemessener\ Massestrom}{1+\frac{m_e}{100}}.$$

**8.** Messgeräteelektronik (20) für ein Durchflussmessgerät (5), dazu konfiguriert, ein Prozessfluid in der kritischen Phase zu empfangen, wobei die Messgeräteelektronik (20) eine Schnittstelle (201), die dazu konfiguriert ist, mit einer Durchflussmessgeräteanordnung des Durchflussmessgeräts (5) zu kommunizieren und eine Vibrationsantwort zu empfangen, und ein Verarbeitungssystem (203) umfasst, das mit der Schnittstelle (201) gekoppelt ist, Folgendes umfassend:

eine Massestromkorrekturroutine (215), die zu Folgendem konfiguriert ist:

Messen einer Temperatur (224) des Prozessfluids in dem Durchflussmessgerät (5);
Messen einer Dichte (225) des Prozessfluids in dem Durchflussmessgerät (5);
Berechnen einer Schallgeschwindigkeit (VoS) (244) des Prozessfluids in dem Durchflussmessgerät (5), wobei das Berechnen der VoS des Fluids das Verwenden der Temperatur und der Dichte umfasst;
Berechnen eines Massedurchsatzfehlers;
Berechnen eines korrigierten Massedurchsatzes des Prozessfluids in dem Durchflussmessgerät (5).

**9.** Verfahren zum Betreiben eines Durchflussmessgeräts nach Anspruch 8, wobei das Fluid eines von Ethylen, Ethan und Kohlenstoffdioxid umfasst.

**10.** Verfahren zum Betreiben eines Durchflussmessgeräts nach Anspruch 8, wobei das Fluid eines von Freon, Schwefelhexafluorid und Uranhexafluorid umfasst.

**11.** Messgeräteelektronik (20) nach Anspruch 8, wobei das Berechnen der VoS des Fluids das Querverweisen und Interpolieren der Temperatur und der Dichte unter Verwendung einer VoS-Tabelle umfasst.

**12.** Messgeräteelektronik (20) nach Anspruch 11, wobei die VoS-Tabelle extrapolierte VoS-Werte umfasst.

**13.** Messgeräteelektronik (20) nach Anspruch 8, wobei der Massedurchsatzfehler wie folgt berechnet wird:

$$Massedurchsatzfehler = m_e = C\left(\frac{2\pi f d}{2a}\right)^2 \%$$

wobei:

$C$ = Messgerätkonstante (z. B. $\frac{1}{2}$) ;

$f$ = Betriebsfrequenz des Messgeräts, hz;
$d$ = Röhrendurchmesser des Messgeräts, Meter;
$a$ = Schallgeschwindigkeit (auch bekannt als VoS) des Fluids, m/s.

**14.** Messgeräteelektronik (20) nach Anspruch 8, wobei der korrigierte Massedurchsatz wie folgt berechnet wird:

$$korrigierter\ Massestrom\ = \frac{gemessener\ Massestrom}{1+\frac{m_e}{100}}.$$

**Revendications**

**1.** Procédé de fonctionnement d'un débitmètre comprenant :

la circulation d'un fluide en phase critique à travers le débitmètre ;
la mesure d'un débit massique non corrigé du fluide ;
la mesure d'une température du fluide ;
la mesure d'une densité du fluide ;
le calcul d'une vitesse du son (VoS) du fluide, dans lequel le calcul de la VoS du fluide comprend l'utilisation de la température et de la densité ;
le calcul d'une erreur de débit massique ;
le calcul d'un débit massique corrigé du fluide.

2. Procédé de fonctionnement d'un débitmètre selon la revendication 1, dans lequel le fluide comprend l'éthylène, l'éthane et le dioxyde de carbone.

3. Procédé de fonctionnement d'un débitmètre selon la revendication 1, dans lequel le fluide comprend le fréon, l'hexafluorure de soufre et l'hexafluorure d'uranium.

4. Procédé de fonctionnement d'un débitmètre selon la revendication 1, dans lequel le calcul de la VoS du fluide comprend un renvoi et une interpolation de la température et de la densité à l'aide d'une table de VoS.

5. Procédé de fonctionnement d'un débitmètre selon la revendication 4, dans lequel la table de VoS comprend des valeurs de VoS extrapolées.

6. Procédé de fonctionnement d'un débitmètre selon la revendication 1, dans lequel le calcul de l'erreur de débit massique est calculée comme suit :

$$erreur\ de\ débit\ massique\ =\ m_e = C\left(\frac{2\pi f d}{2a}\right)^2 \%$$

dans lequel :

$C$ = constante de compteur (par exemple, $\frac{1}{2}$.) ;

$f$ = fréquence de fonctionnement de compteur, Hz ;
$d$ = diamètre de tube de compteur, mètres ;
$a$ = vélocité acoustique (aussi appelée VoS) du fluide, m/s.

7. Procédé de fonctionnement d'un débitmètre selon la revendication 1, dans lequel le débit massique corrigé est calculé comme suit : $Débit\ massique\ corrigé = \frac{débit\ massique\ mesuré}{1+\frac{m_e}{100}}$ .

8. Électronique de compteur (20) pour un débitmètre (5) configuré pour recevoir un fluide de traitement en phase critique, l'électronique de compteur (20) comprenant une interface (201) configurée pour communiquer avec un ensemble de débitmètre du débitmètre (5), et recevoir une réponse vibrationnelle, et un système de traitement (203) couplé à l'interface (201) comprenant :
un sous-programme de correction de débit massique (215) configuré pour :

mesurer une température (224) du fluide de traitement dans le débitmètre (5) ;
mesurer une densité (225) du fluide de traitement dans le débitmètre (5) ;
calculer une vitesse du son (VoS) (244) du fluide de traitement dans le débitmètre (5), dans lequel le calcul de la VoS du fluide comprend l'utilisation de la température et de la densité ;
calculer une erreur de débit massique ;
calculer un débit massique corrigé du fluide de traitement dans le débitmètre (5).

9. Procédé de fonctionnement d'un débitmètre selon la revendication 8, dans lequel le fluide comprend l'éthylène, l'éthane et le dioxyde de carbone.

10. Procédé de fonctionnement d'un débitmètre selon la revendication 8, dans lequel le fluide comprend le fréon, l'hexafluorure de soufre et l'hexafluorure d'uranium.

11. Électronique de compteur (20) selon la revendication 8, dans laquelle le calcul de la VoS du fluide comprend un renvoi et une interpolation de la température et de la densité à l'aide d'une table de VoS.

12. Électronique de compteur (20) selon la revendication 11, dans laquelle la table de VoS comprend des valeurs de VoS extrapolées.

13. Électronique de compteur (20) selon la revendication 8, dans laquelle l'erreur de débit massique est calculée comme suit : $erreur\ de\ débit\ massique = m_e = C\left(\frac{2\pi f d}{2a}\right)^2 \%$ dans laquelle :

C = constante de compteur (par exemple, $\frac{1}{2}$ ) ;
f = fréquence de fonctionnement de compteur, Hz ;
d = diamètre de tube de compteur, mètres ;
a = vélocité acoustique (aussi appelée VoS) du fluide, m/s.

14. Électronique de compteur (20) selon la revendication 8, dans laquelle le débit massique corrigé est calculé comme suit : $Débit\ massique\ corrigé = \frac{débit\ massique\ mesuré}{1+\frac{m_e}{100}}$ .

**FIG.1**

EP 4 363 808 B1

EP 4 363 808 B1

## METER ELECTRONICS 20

### PROCESSING SYSTEM 203

#### STORAGE SYSTEM 204

| | | | |
|---|---|---|---|
| FLOWMETER ROUTINE | 205 | DRIVE GAIN | 306 |
| MASS FLOW | 221 | DRIVE GAIN THRESHOLD | 303 |
| DENSITY | 225 | VELOCITY OF SOUND | 244 |
| VISCOSITY | 223 | PRESSURE | 248 |
| TEMPERATURE | 224 | | |
| MASS-WEIGHTED DENSITY/VISCOSITY ROUTINE | 209 | | |
| MASS-WEIGHTED TEMP ROUTINE | 211 | | |
| VELOCITY OF SOUND ROUTINE | 213 | | |
| MASS FLOW CORRECTION ROUTINE | 215 | | |

INTERFACE 201

# FIG.2

ETHYLENE VoS V PRESSURE

FIG.3

ETHYLENE VoS V DENSITY

VoS m/s

DENSITY, kg/m3

—— 15°C — — 20°C —▲— 25°C — — 30°C ······ 35°C — · — 40°C — — — 45°C —— 50°C

FIG.4

ETHYLENE VELOCITY OF SOUND, m/s

TEMPERATURE °C

| DENSITY, kg/m3 | 15 | 20 | 25 | 30 | 35 | 40 | 45 | 50 |
|---|---|---|---|---|---|---|---|---|
| 25 | 300.5 | 303.65 | 306.77 | 309.82 | 312.82 | 315.77 | 318.7 | 321.57 |
| 50 | 277.91 | 281.92 | 285.84 | 289.68 | 293.42 | 297.1 | 300.7 | 304.24 |
| 75 | 259.12 | 263.97 | 268.86 | 273.52 | 278.04 | 282.46 | 286.76 | 290.98 |
| 100 | 244.27 | 250.08 | 256.05 | 261.58 | 266.94 | 272.12 | 277.16 | 282.07 |
| 125 | 233.03 | 238.3 | 247.36 | 253.92 | 260.19 | 266.22 | 272.05 | 277.7 |
| 150 | 224.93 | 231.73 | 242.64 | 250.52 | 257.91 | 264.9 | 271.62 | 278.08 |
| 175 | 219.81 | 231.83 | 242.18 | 251.7 | 260.39 | 268.57 | 276.27 | 283.64 |
| 200 | 219.83 | 234 | 247.18 | 258.38 | 268.55 | 277.98 | 286.76 | 295.07 |
| 225 | 226.78 | 242.75 | 258.95 | 272.07 | 283.74 | 294.31 | 304.15 | 313.42 |
| 250 | 243.36 | 262.75 | 280.22 | 294.76 | 307.51 | 319.14 | 329.91 | 340.04 |
| 275 | 274.41 | 295.52 | 313.29 | 328.41 | 341.91 | 354.27 | 365.75 | 376.59 |
| 300 | 322.26 | 341.9 | 359.71 | 374.82 | 388.58 | 401.25 | 413.08 | 424.24 |
| 325 | 385.64 | 403.87 | 420.04 | 434.63 | 448.1 | 460.66 | 472.42 | |
| 350 | 462.64 | 474.85 | 493.88 | 507.64 | 520.46 | | | |
| 375 | 552.37 | 566.96 | 580.52 | | | | | |
| 400 | 653.77 | | | | | | | |

# FIG.5A

EP 4 363 808 B1

ETHYLENE VELOCITY OF SOUND, m/s

| DENSITY, kg/m3 | TEMPERATURE °C | | | | | | | |
|---|---|---|---|---|---|---|---|---|
| | 15 | 20 | 25 | 30 | 35 | 40 | 45 | 50 |
| 25 | 300.5 | 303.65 | 306.77 | 309.82 | 312.82 | 315.77 | 318.7 | 321.57 |
| 50 | 277.91 | 281.92 | 285.84 | 289.68 | 293.42 | 297.1 | 300.7 | 304.24 |
| 75 | 259.12 | 263.97 | 268.86 | 273.52 | 278.04 | 282.46 | 286.76 | 290.98 |
| 100 | 244.27 | 250.08 | 256.05 | 261.58 | 266.94 | 272.12 | 277.16 | 282.07 |
| 125 | 233.03 | 238.3 | 247.36 | 253.92 | 260.19 | 266.22 | 272.05 | 277.7 |
| 150 | 224.93 | 231.73 | 242.64 | 250.52 | 257.91 | 264.9 | 271.62 | 278.08 |
| 175 | 219.81 | 231.83 | 242.18 | 251.7 | 260.39 | 268.57 | 276.27 | 283.64 |
| 200 | 219.83 | 234 | 247.18 | 258.38 | 268.55 | 277.98 | 286.76 | 295.07 |
| 225 | 226.78 | 242.75 | 258.95 | 272.07 | 283.74 | 294.31 | 304.15 | 313.42 |
| 250 | 243.36 | 262.75 | 280.22 | 294.76 | 307.51 | 319.14 | 329.91 | 340.04 |
| 275 | 274.41 | 295.52 | 313.29 | 328.41 | 341.91 | 354.27 | 365.75 | 376.59 |
| 300 | 322.26 | 341.9 | 359.71 | 374.82 | 388.58 | 401.25 | 413.08 | 424.24 |
| 325 | 385.64 | 403.87 | 420.04 | 434.63 | 448.1 | 460.66 | 472.42 | 482.58 |
| 350 | 462.64 | 474.85 | 493.88 | 507.64 | 520.46 | 531.73 | 539.36 | 542.99 |
| 375 | 552.37 | 566.96 | 580.52 | 592.33 | 601.32 | 605.365 | 606.42 | 603.4 |
| 400 | 653.77 | 665.87 | 674.86 | 679.26 | 682.34 | 678.9965 | 673.47 | 663.81 |

FIG.5B

FIG.6

**ETHANE VELOCITY OF SOUND VS. TEMPERATURE AND DENSITY**

| TEMPERATURE °C | DENSITY kg/m3 | | | | | | | | | | | | | | | | |
|---|---|---|---|---|---|---|---|---|---|---|---|---|---|---|---|---|---|
| | 50 | 75 | 100 | 125 | 150 | 175 | 200 | 225 | 250 | 275 | 300 | 325 | 350 | 375 | 400 | 425 | 450 |
| -3.9 | | | | | | | | | | | | | | | 559.60 | 710.20 | 865.8 |
| -1.1 | | | | | | | | | | | | | | | 571.70 | 719.90 | 869.7 |
| 1.7 | | | | | | | | | | | | | | | 584.50 | 729.10 | 882.5 |
| 4.4 | | | | | | | | | | | | | | | 595.80 | 737.90 | 883.4 |
| 7.2 | | | | | | | | | | | | | | 472.80 | 741.50 | 746.40 | |
| 10.0 | | | | | | | | | | | | | | 486.60 | 616.70 | 753.70 | |
| 12.8 | | 213.60 | | | | | | | | | | | | 498.40 | 626.30 | 762.00 | |
| 15.6 | | 217.10 | | | | | | | | | | | 394.00 | 509.90 | 635.50 | 768.20 | |
| 18.3 | | 220.4 | | | | | | | | | | | 406.7 | 520.9 | 644.2 | | |
| 21.1 | | 223.6 | | | | | | | | | | | 419.6 | 531.2 | 652.7 | | |
| 23.9 | | 226.7 | 206.2 | | | | | | | | | 333 | 431.8 | 540.9 | 660.9 | | |
| 26.7 | | 229.7 | 210.1 | | | | | | | | | 348 | 443.1 | 550 | 668.2 | | |
| 29.4 | 256 | 232.7 | 213.9 | | | | | | | | 281.9 | 361.3 | 453.7 | 558.8 | 673.4 | | |
| 32.2 | 258.3 | 235.5 | 217.4 | 203.5 | 191.2 | | | | | 236.9 | 297.6 | 373.3 | 463.5 | 567.2 | | | |
| 35.0 | 260.6 | 238.4 | 220.9 | 207.9 | 198 | 190.1 | 190.8 | 194.9 | 215.1 | 253.9 | 310.8 | 384.2 | 472.8 | 569.3 | | | |
| 37.8 | 262.9 | 241.1 | 224.3 | 212 | 203.6 | 198.8 | 199.4 | 208.2 | 229.4 | 267 | 322.3 | 394.2 | 481.6 | 569.9 | | | |

**FIG.7**

EP 4 363 808 B1

CO2 VoS VS. DENSITY AND TEMPERATURE

DENSITY kg/m3

| TEMPERATURE °C | 250 | 300 | 350 | 400 | 450 | 500 | 550 | 600 | 650 | 700 | 750 | 800 | 850 | 900 | 950 | 1000 | 1050 | 1100 | 1150 | 1200 |
|---|---|---|---|---|---|---|---|---|---|---|---|---|---|---|---|---|---|---|---|---|
| -12.2 | | | | | | | | | | | | | | | | 659.6 | 715.5 | 908.9 | | |
| -6.7 | | | | | | | | | | | | | | | | 676.3 | 783.6 | | | |
| -1.1 | | | | | | | | | | | | | | | 585.5 | 693 | | | | |
| 4.4 | | | | | | | | | | | | | | | 604.8 | 708.1 | | | | |
| 10.0 | | | | | | | | | | | | | | 523 | 622.1 | | | | | |
| 15.6 | | | | | | | | | | | | | 448.5 | 542.9 | 637.4 | | | | | |
| 21.1 | | | | | | | | | | | | | 471.9 | 560 | | | | | | |
| 26.7 | | | | | | | | | | | | 411.1 | 490.5 | 574.1 | | | | | | |
| 32.2 | | | | | | | | | | 301.7 | 362.3 | 430.7 | 507.1 | | | | | | | |
| 37.8 | | | | | | | 214.6 | 240.2 | 277.5 | 325.4 | 382.1 | 447.9 | | | | | | | | |
| 43.3 | | | 205.7 | 205.9 | 210.3 | 220.0 | 237.1 | 263.3 | 298.9 | 344.1 | 398.9 | | | | | | | | | |
| 48.9 | | 216.1 | 215.2 | 217.5 | 223.9 | 235.5 | 253.8 | 280.1 | 315.2 | 359.8 | | | | | | | | | | |

FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6412355 B1

- WO 2021086401 A